Europäisches Patentamt

European Patent Office

Office européen des brevets

(19)

(11) Numéro de publication: **0 184 492**
**B1**

(12) **FASCICULE DE BREVET EUROPÉEN**

(45) Date de publication du fascicule du brevet:
08.06.88

(51) Int. Cl.⁴: **B 62 B 3/10,** A 61 G 5/00

(21) Numéro de dépôt: 85402235.7

(22) Date de dépôt: 19.11.85

(54) **Chariot de transport destiné à être mis à la disposition de personnes handicapées se déplaçant sur une chaise roulante.**

(30) Priorité: 20.11.84 FR 8417644

(43) Date de publication de la demande:
11.06.86 Bulletin 86/24

(45) Mention de la délivrance du brevet:
08.06.88 Bulletin 88/23

(84) Etats contractants désignés:
BE CH DE GB IT LI LU NL SE

(56) Documents cité:
EP-A-0 102 848
WO-A-84/01335
US-A-2 556 121
US-A-4 257 545
US-A-4 305 601

(73) Titulaire: **ATELIERS REUNIS CADDIE, 13, rue de la Mairie, F-67300 Schiltigheim (FR)**

(72) Inventeur: **Weill, Guy, 13, Avenue du Ried, F-67800 Hoenheim (FR)**

(74) Mandataire: **Tony- Durand, Serge, Cabinet Tony-Durand 77, rue Boissière, F-75116 Paris (FR)**

EP 0 184 492 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

## Description

La présente invention a pour objet un chariot de transport susceptible d'être utilisé par des personnes handicapées se déplaçant sur une chaise roulante.

Ce chariot est plus spécialement destiné à être mis à la disposition de telles personnes dans des supermarchés ou autres magasins de vente pour qu'elles puissent transporter les produits et marchandises dont elles désirent faire l'achat.

Pour permettre la manoeuvre d'un chariot de supermarché par une personne placée sur une chaise roulante, il a déjà été proposé différents systèmes d'attache destinés à assurer un accouplement entre une telle chaise et un tel chariot. Cependant, ces systèmes, qui utilisent en général des liaisons par liens élastiques ou par chaînes métalliques, ont l'inconvénient majeur que leur mode d'emploi n'est pas évident pour les utilisateurs éventuels. Par ailleurs, ces systèmes ne sont pas en mesure d'assurer une solidarisation réelle entre le chariot et la chaise correspondante car ils laissent entre ceux-ci une liberté de débattement génante pour la manoeuvre du chariot par l'utilisateur.

Le document EP-A-0 102 848 qui correspond au préambule de la revendication 1 décrit un chariot de transport destiné à être mis à la disposition de personnes handicapées de déplaçant sur une chaise roulante, et qui comporte des moyens d'attache permettant l'accouplement démontable d'une telle chaise avec ce chariot durant son utilisation. Ces moyens d'attache consiste en deux bras faisant saillie vers l'arrière, sur l'un et l'autre côtés du chariot, et dont l'extrémité libre comporte un organe apte à recevoir le montant avant correspondant d'une chaise d'handicapé. Chacun des ces organes de réception consiste en une sorte de bride susceptible de s'emboîter partiellement autour du montant tubulaire correspondant. La solidarisation de la chaise d'handicapé avec le chariot de transport est alors assurée par le fait que l'un des bras d'accouplement est rigidement fixé sur son support prévu sur le chariot, alors que l'autre bras est monté pivotant sur ce même support et qu'il existe entre ces deux bras un système d'écartement ou de serrage qui permet de serrer les brides de réception sur les montants correspondants de la chaise d'handicapé.

Toutefois un tel dispositif est relativement compliqué. Par ailleurs son utilisation par un handicapé est extrémement peu facile, puisque celui-ci doit à la fois adapter les brides sur les montants avant de sa chaise roulante et manoeuvrer le système d'écartement ou de serrage jusqu'à ce que les brides soient convenablement serrées sur les montants correspondants. Toutefois tant que ce serrage n'a pas été réalisé, il faut maintenir les brides emboîtées sur les montants correspondants. Il s'agit donc d'une manoeuvre extrémement peu aisée à réaliser pour une personne handicapée se trouvant placée sur une chaise roulante.

C'est pourquoi la présente invention a pour but de réaliser un chariot de transport qui est équipé de façon à pouvoir être solidarisé facilement et étroitement avec la chaise roulante d'un handicapé.

A cet effet, ce chariot comporte deux bras d'accouplement, faisant saillie vers l'arrière, sur l'un et l'autre côtés de ce chariot, et dont l'un est monté rotatif sur le montant correspondant du chariot, l'extrémité libre de chacun de ces bras comportant un organe apte à recevoir le montant avant correspondant d'une chaise d'handicapé, et ce chariot est caractérisé en ce que:

- l'organe de réception ainsi prévu en bout de chaque bras d'accouplement consiste en une mâchoire pourvue d'un organe escamotable susceptible d'assurer le verrouillage àu montant avant correspondant à'une chaise d'handicapé à l'intérieur de la mâchoire correspondante,

- et l'un de ces bras d'accouplement est monté coulissant, mais non rotatif, sur le montant correspondant du chariot, cependant que l'autre bras d'accouplement est monté à la fois coulissant et rotatif sur le montant respectif de celui-ci.

Ainsi la manoeuvre d'accouplement d'une chaise d'handicapé avec le présent chariot de transport est très facile à réaliser et le verrouillage des montants avant d'une telle chaise à l'intérieur des mâchoires correspondantes assure une parfaite solidarisation de cette chaise et du chariot utilisé. Dans ces conditions l'utilisateur peut manoeuvrer ce chariot sans aucune difficulté. Par ailleurs, la position des machoires portées par l'un et l'autre des deux bras d'accouplement peut et en largeur, pour permettre l'engagement des montants avant d'une chaise d'handicape à l'intérieur de ces mâchoires, quelque soit le type de cette chaise.

Cependant, la présente invention a également pour objet un dispositif d'accouplement du type défini ci-dessus et qui est spécialement destiné à équiper un chariot susceptible d'être mis à la disposition de personnes handicapées se déplaçant sur une chaise roulante.

Du reste, l'objet de l'invention et ses avantages apparaîtront plus clairement au cours de la description suivante. Celle-ci est donnée en référence au dessin annexé à simple titre indicatif, et sur lequel:

- la figure 1 est une vue en perspective d'un chariot selon l'invention auquel est attachée une chaise d'handicapé au moyen du dispositif d'accouplement prévu sur ce chariot;

- la figure 2 est une vue en perspective de l'un des bras latéraux de ce dispositif d'accouplement et de la mâchoire correspondante de verrouillage;

- la figure 3 est une vue schématique en plan de dessus des deux bras de ce dispositif

- les figures 4 et 5 sont des vues en coupe de la mâchoire de verrouillage portée par l'un des bras du dispositif d'accouplement, ces vues correspondant à une coupe selon le plan horizontal médian de cette mâchoire.

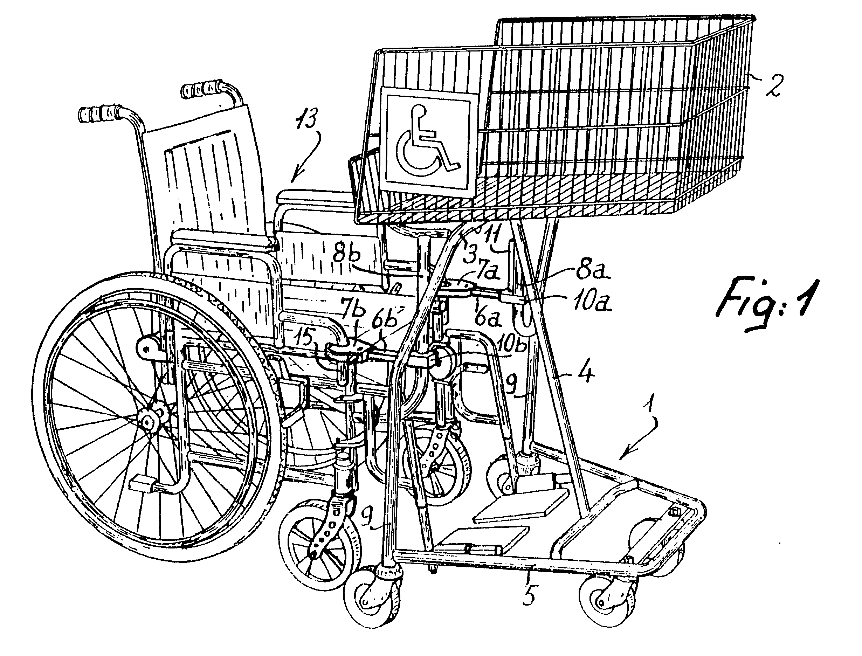

Le chariot l'représenté à la figure 1, comporte une corbeille 2 destinée à recevoir les marchandises à transporter. Cette corbeille est supportée par un arceau 3 et une jambe d'appui 4 solidaires du socle 5 de ce chariot.

Le dispositif d'accouplement dont est équipé le présent chariot consiste en deux bras 6a et 6b qui font saillie horizontalement à l'arrière du chariot et qui portent chacun en bout une mâchoire d'accouplement 7a ou 7b. Les extrémités avant de ces deux bras sont portées par deux montants verticaux, respectivement 8a et 8b, qui font partie de la structure du chariot. Ces montants sont situés sur l'un et l'autre côtés de celui-ci, leur extrémité inférieure coudée étant soudée sur la branche latérale correspondante 9 de l'arceau 3. Quant à leur extrémité supérieure, elle est solidaire de la partie supérieure de la structure du chariot.

A son extrémité avant, chaque bras 6a ou 6b comporte un coulisseau 10a ou 10b qui est monté coulissant dans le sens vertical sur le montant correspondant 8a ou 8b. Ainsi chaque bras 6a ou 6b peut être déplacé dans le sens de la hauteur pour régler à volonté sa position.

Cependant, l'un de ces deux bras peut en plus tourner autour du montant correspondant, tandis que l'autre s'en trouve empêché. Ainsi dans l'exemple représenté le bras 6b de droite peut librement pivoter dans un sens ou dans l'autre selon les flèches F1 et F2 autour du montant 8b. Par contre, le bras 6a de gauche s'en trouve empêché car le montant correspondant 6a porte un rail vertical 11 engagé dans une gorge 12 prévue dans le coulisseau 10a du bras 6a. Comme il sera explique plus en détail par la suite, ceci permet de régler convenablement la position des deux mâchoires d'accouplement 7a et 7b selon les besoins, tout en obtenant ensuite une parfaite solidarisation de la chaise d'handicapé correspondante 13 avec le chariot.

Chaque mâchoire d'accouplement 7a ou 7b est constituée par un boîtier plat présentant, à l'arrière, une échancrure 14 destinée à recevoir un montant avant 15 d'une chaise d'handicapé 13. Ce montant peut être constitué par la partie verticale d'un arceau faisant partie de la structure de l'un ou l'autre côté de cette chaise.

A l'intérieur du boîtier de chaque mâchoire, il est prévu un organe de verrouillage 16 en forme de fourche qui est monté pivotant autour d'un axe fixe 17. Cet organe coopère avec un cliquet escamotable 18 monté pivotant autour d'un axe 19. Ce cliquet affecte la forme d'un levier coudé dont l'une des extrémités constitue le cliquet proprement dit, tandis que l'autre 20 fait saillie en dehors du boîtier de la mâchoire correspondante pour pouvoir être actionné par l'utilisateur afin de commander l'effacement de ce cliquet.

Celui-ci est relié à la fourche de verrouillage 16 par un ressort de rappel 21. Par ailleurs, la face de cette fourche, contre laquelle s'appuie l'extrémité de ce cliquet, comporte une série de crans 22 pouvant déterminer plusieurs positions de cette fourche.

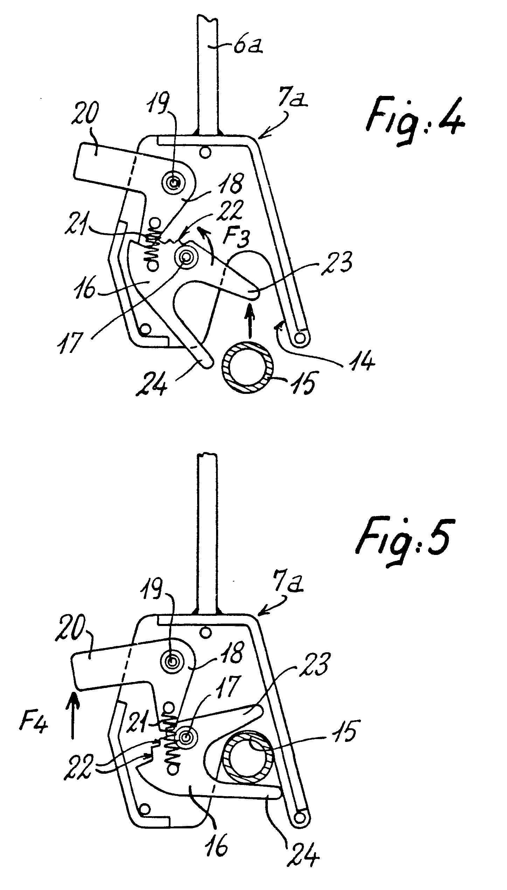

Ainsi dans sa position d'attente représentée à la figure 4, cette fourche se trouve disposée d'une telle façon que l'une de ses branches, en l'occurrence sa branche 23, se trouve disposée sur la trajectoire du montant 15 de la chaise 13 lorsque ce montant est engagé à l'intérieur de l'échancrure 14 de la mâchoire correspondante. Quant à l'autre branche 24 de la fourche 16, elle se trouve alors placée en dehors de l'échancrure 14 de sorte qu'elle ne gêne pas l'introduction du montant 15 à l'intérieur de cette échancrure.

Avant que ce montant parvienne dans le fond de l'échancrure 14, il vient faire appui sur la branche 23 de la fourche de verrouillage 16. Ceci amène cette fourche à pivoter dans le sens de la flèche F3 pour venir occuper sa position de verrouillage représentée à la figure 5. Dans cette position la seconde branche 24 de la fourche de verrouillage se trouve alors disposée derrière le montant 15, ce qui assure sa retenue à l'intérieur de la mâchoire d'accouplement correspondante.

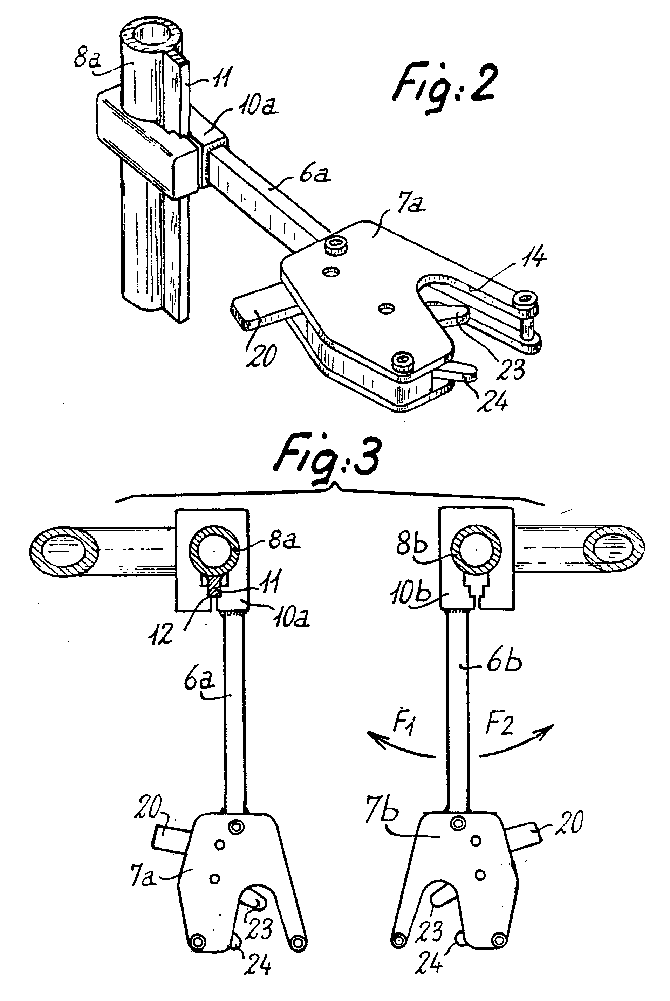

La fourche de verrouillage 16 est maintenue dans sa position correspondante par le cliquet 16 et le ressort 21. Cependant, pour pouvoir dégager le montant 15 en dehors de la mâchoire d'accouplement correspondante, il suffit d'exercer une poussée dans le sens de la flèche F4 sur l'extrémité externe 20 du cliquet 16 afin de provoquer le retour de la fourche 16 dans sa position de non-verrouillage et d'attente. En effet, l'effacement du cliquet 18 permet à la fourche de verrouillage 16 de revenir dans la position représentée à la figure 3, sous l'action du ressort de rappel 21.

Dans ces conditions, les manoeuvres d'accouplement et de désaccouplement d'une chaise d'handicapé acvec un chariot 1 selon l'invention sont évidentes pour l'utilisateur et ne présentent aucun problème. De plus, ces manoeuvres sont très faciles à réaliser. Ainsi pour réaliser l'accouplement de la chaise 13 avec le chariot 1, il suffit à l'utilisateur d'approcher suffisamment sa chaise de l'extrémité arrière de ce chariot pour engager les montants latéraux 15 de cette chaise à l'intérieur des deux mâchoires 7a et 7b, cec qui provoque automatiquement le verrouillage de ces montants dans ces mâchoires.

Bien entendu, il convient de régler au préalable la position des deux mâchoires d'accouplement 7a et 7b en fonction de l'écartement des montants 15 et de leur position en hauteur suivant le type de chaise d'handicapé. Or, ce réglage est rendu possible par le fait que les deux bras 6a et 6b peuvent être déplacés dans le sens vertical par coulissement de leurs coulisseaux 10a et 10b sur les montants 6a et 6b et que par ailleurs, l'un de ces bras, en l'occurrence le bras 6b, peut de plus tourner autour du montant correspondant. Cependant,comme l'autre bras 6a s'en trouve empêché, on obtient néanmoins une parfaite solidarisation de la chaise 13 avec le chariot 1 sans possibilité de débattement intempestif entre cette chaise et ce chariot. Dans ces conditions, le présent dispositif d'accouplement a pour avantage de permettre une manoeuvre facile du chariot, ce qui n'était pas le cas avec le dispositif d'attache prévu jusqu'ici dans les cas de ce genre.

Ainsi qu'il a déjà été indiqué, la présente invention a pour objet non seulement le chariot pour handicapé tel que décrit ci-dessus, mais également le dispositif d'accouplement spécialement conçu pour ce chariot et qui est constitué par les deux bras 6a et 6b équipés de coulisseaux 10a et 10b ainsi que des mâchoires d'accouplement 7a et 7b.

Bien entendu, le chariot selon l'invention n'est pas limité à la forme particulière de structure qui est représentée à la figure 1. En effet, ce chariot pourrait comporter d'autres formes de structures pour autant qu'il possède à l'arrière deux montants latéraux susceptibles de recevoir les coulisseaux 10a et 10b des deux bras 6a et 6b du dispositif d'accouplement. De même le système de verrouillage prévu dans les mâchoires de ce dispositif pourrait être modifié.

## Revendications

1. Chariot de transport destiné à être mis à la disposition de personnes handicapées se déplaçant sur une chaise roulante, et comportant deux bras d'accouplement, faisant saillie vers l'arrière, sur l'un et l'autre côtés de ce chariot, et dont l'un est monté rotatif sur le montant correspondant du chariot, l'extrémité libre de chacun de ces bras comportant un organe apte à recevoir le montant avant correspondant d'une chaise d'handicapé, caractérisé en ce que

- l'organe de réception ainsi prévu en bout de chaque bras d'accouplement (6a, 6b), consiste en une mâchoire (7a, 7b) pourvue d'un organe escamotable susceptible d'assurer le verrouillage du montant avant correspondant (15) d'une chaise d'handicapé à l'intérieur de la mâchoire correspondante,

- et l'un de ces bras d'accouplement (6a) est monté coulissant, mais non rotatif, sur le montant correspondant (8a) du chariot, cependant que l'autre bras d'accouplement (6b) est monté à la fois coulissant et rotatif sur le montant respectif (8b) de celui-ci.

2. Chariot de transport selon la revendication 1, caractérisé en ce que l'organe de verrouillage prévu dans la màchoire (7a, 7b), portée par chaque bras (6a, 6b) du dispositif d'accouplement, consiste en une fourche pivotante (16) associée à un cliquet (18) d'immobilisation et dont une branche (23) se trouve, en position d'attente, sur la trajectoire du montant correspondant (15) d'une chaise d'handicapé lors de son engagement dans cette mâchoire, son autre branche (24) venant se placer derrière ce même montant pour le retenir lorsque cette fourche se trouve dans la position de verrouillage.

3. Dispositif d'accouplement destiné à équiper un chariot de transport selon l'une des revendications précédentes, ce dispositif étant caractérisé en ce qu'il consiste en deux bras (6a, 6b) susceptibles d'être fixés dans une position horizontale, sur les montants arrière (8a, 8b) de l'un et l'autre côté d'un tel chariot d'achat et qui portent en bout une mâchoire (7a, 7b) apte à recevoir le montant avant (15) correspondant d'une chaise d'handicapé, cette mâchoire étant pourvue d'un organe escamotable de verrouillage de ce montant.

4. Dispositif d'accouplement selon la revendication 3, caractérisé en ce que l'organe de verrouillage prévu dans la mâchoire (7a, 7b), portée par chaque bras (6a, 6b) du dispositif d'accouplement, consiste en une fourche pivotante (16) associée à un cliquet (18) d'immobilisation et dont une branche (23) se trouve, en position d'attente, sur la trajectoire du montant correspondant (15) d'une chaise d'handicapé lors de son engagement dans cette mâchoire, son autre branche (24) venant se placer derrière ce même montant pour le retenir lorsque cette fourche se trouve dans sa position de verrouillage.

5. Dispositif d'accouplement selon la revendication 4, caractérisé en ce que le cliquet (18) et la fourche (16) de verrouillage sont reliés par un ressort (21) apte à rappeler cette fourche dans sa position de non-verrouillage lorsque le cliquet est effacé, ce dernier pouvant être actionné par manoeuvre de son extrémité (20) qui fait saillie en dehors du boîtier de la mâchoire correspondante d'accouplement (7a, 7b).

## Patentansprüche

1. Transportwagen, wie er rollstuhlfahrenden Behinderten zur Verfügung gestellt wird mit zwei nach hinten vorspringenden Kupplungsarmen an beiden Seiten des Wagens, von denen einer schwenkbar an einer entsprechenden Stütze des wagens befestigt ist, wobei das freie Ende jedes Armes eine Vorrichtung zur Aufnahme der entsprechenden Forderstütze des Rollstuhles aufweist, dadurch gekennzeichnet, daß die an jedem Ende jedes Kupplungarmes (6a, 6b) vorgesehene Aufnahmevorrichtung eine Klemmbacke (7, 7b) aufweist, die mit einem beweglichen Organ versehen ist, mit welchem die Forderstütze (15) des Rollstuhles im Inneren der Klemmbacke verriegelbar ist, und daß einer der Kupplungsarme (8a) verschiebbar und nicht schwenkbar an der entsprechenden Stütze (8a) des Wagens geführt ist und der andere Kupplungsarm (8b) verschiebbar und verschwenkbar auf der entsprechenden Stütze (8b) geführt ist.

2. Transportwagen nach Anspruch 1, dadurch gekennzeichnet, daß das Verriegelungsorgan in der Klemmbacke (7a, 7b) der Aufnahmevorrichtung jedes Kupplungsarmes (6a, 6b) eine schwenkbare Gabel (16) aufweist, die mit einer Rastklinke (18) zusammenarbeitet, wobei sich der eine Schenkel (23) der Gabel in der Wartestellung in der Bewegungsbahn der entsprechenden Stütze (15) eines Rollstuhles befindet und sich der andere Schenkel (24) nach dem Einlegen der Stütze in der Riegelstellung hinter der Stütze befindet.

3. Kupplungsvorrichtung an einem Transportwagen nach einem der vorausgehenden Ansprüche, dadurch gekennzeichnet, daß die Vorrichtung zwei Arme (6a, 6b) aufweist, die horizontal an den hinteren Stützen (8a, 8b) an beiden Seiten eines Einkaufswagens befestigt sind und an den Enden jeweils eine Klemmbacke (7a, 7b) zur Aufnahme der entsprechenden Forderstütze (15) eines Rollstuhles tragen, wobei die Klemmbacke mit einem beweglichen Organ zum Verriegeln der Stütze ausgestattet ist.

4. Kupplungsvorrichtung nach Anspruch 3, dadurch gekennzeichnet, daß das in der Klemmbacke (7a, 7b) jedes Kupplungsarmes (6a, 6b) vorgesehene Riegelorgan aus einer schwenkbaren Gabel (16) gebildet ist, die mit einer Rastklinke (18) zusammenarbeitet, wobei sich der eine Schenkel (23) der Gabel in der Wartestellung in der Bewegungsbahn der entsprechenden Stütze (15) eines Rollstuhles befindet und der andere Schenkel (24) nach dem Einlegen der Stütze in der Reigelstellung hinter der Stütze liegt.

5. Kupplungsvorrichtung nach Anspruch 4, dadurch gekennzeichnet, daß die Rastklinke (18) und die Gabel (16) durch eine Feder verbunden sind, welche die Gabel bei gelöster Rastklinke in die nicht verriegelte Stellung zieht und die Rastklinke am Ende (20) betätigt wird, welches aus dem Gehäuse der Klemmbacke (7a, 7b) herausragt.

**Claims**

1. Carrier trolley which is intended to be placed at the disposal of handicapped persons as they move about on a wheelchair, and provided with two coupling arms which project towards the rear on each side of said trolley and one of which is rotatably mounted on the corresponding upright member of the trolley, the free end of each of these arms being provided with an element which is capable of receiving the corresponding front upright member of a handicapped person's wheelchair, characterized in that:

- the receiving element thus provided at the end of each coupling arm (6a, 6b) consists of a jaw unit (7a, 7b) provided with a retractable member which is capable of locking the corresponding front upright member (15) of a handicapped person's wheelchair within the corresponding jaw unit,

- and one of these coupling arms (6a) is slidably but not rotatably mounted on the corresponding upright member (8a) of the trolley whilst the other coupling arm (6b) is both slidably and rotatably mounted on the respective upright member (8b) of this latter.

2. Carrier trolley in accordance with claim 1, characterized in that the locking member provided in the jaw unit (7a, 7b) carried by each arm (6a, 6b) of the coupling device consists of a pivoting fork (16) which is associated with a locking pawl (18) and one arm (23) of which is located in the stand-by position on the path of the corresponding upright member (15) of a handicapped person's wheelchair at the time of its engagement in said jaw unit, its other arm (24) being intended to be placed behind the same upright member so as to retain it when said fork is located in the locking position.

3. Coupling device which is intended to equip a carrier trolley in accordance with any one of the preceding claims, this device being characterized in that it consists of two arms (6a, 6b) which are capable of being fixed in a horizontal position on the rear upright members (8a, 8b) on each side of a shopping trolley of this type and which carry an end-mounted jaw unit (7a, 7b) for receiving the corresponding front upright member (15) of a handicapped person's wheelchair, this jaw unit being provided with a retractable member for locking said upright member.

4. Coupling device in accordance with claim 3, characterized in that the locking member provided in the jaw unit (7a, 7b) carried by each arm (6a, 6b) of the coupling device consists of a pivoting fork (16) which is associated with a locking pawl (18) and one arm (23) of which is located in the stand-by position on the path of the corresponding upright member (15) of a handicapped person's wheelchair at the time of its engagement in said jaw unit, its other arm (24) being placed in position behind said upright member in order to retain this latter when said fork is located in its locking position.

5. Coupling device in accordance with claim 4, characterized in that the pawl (18) and the locking fork (16) are connected by means of a spring (21) which is capable of restoring said fork to its non-locking position when the pawl is withdrawn, actuation of this latter being possible by operating that end (20) thereof which projects from the casing of the corresponding coupling jaw unit (7a, 7b).

*Fig:1*

0 184 492

Fig:2

Fig:3

Fig.4

Fig:5